# EUROPEAN PATENT SPECIFICATION

(11) **EP 2 580 250 B1**
(45) Date of publication and mention of the grant of the patent: **27.10.2021**
(21) Application number: 11725261.9
(22) Date of filing: 26.05.2011
(51) Int. Cl.: C08C 19/18, C08F 36/16

(54) **PROCESS FOR BROMINATING BUTADIENE POLYMERS**
VERFAHREN ZUR BROMIERUNG VON BUTADIENPOLYMEREN
PROCÉDÉ DE BROMATION DE POLYMÈRES DE BUTADIÈNE

(30) Priority: 14.06.2010 US 354335 P
(43) Date of publication of application: 17.04.2013
(73) Proprietor: DDP Specialty Electronic Materials US, LLC, Wilmington, DE 19805 (US)
(72) Inventor: KING, Bruce, A., Midland MI 48640 (US); HULL, John, Wesley, Midland MI 48640 (US); GORMAN, David, Bruce, Midland MI 48642 (US)
(74) Representative: Beck Greener LLP
(86) International application number: PCT/US2011/038069
(87) International publication number: WO 2011/159448

(56) References cited:
- WO-A1-2009/126531
- WO-A1-2011/008417
- WO-A2-2009/139942

## Description

This application claims priority from United States Provisional Patent Application No. 61/354,335, filed 14 June 2010.

The present invention relates to a process for brominating a butadiene homopolymer or copolymer, such as a brominated block, random or graft copolymer of styrene and butadiene.

WO 2008/021417 describes a process for brominating a butadiene polymer. The brominating agent is a phenyltrialkylammonium tribromide, benzyltrialkylammonium tribromide or tetraalkylammonium tribromide. The process is conducted with the starting polymer in solution. A highly selective bromination of aliphatic carbon-carbon double bonds is achieved, leaving the aromatic rings essentially unaffected.

WO 2009/139942 describes a process in which butadiene copolymers are brominated using certain quaternary ammonium tribromides as the brominating agent.

WO 2009/126531 describes a polybutadiene brominating method using a quaternary ammonium tribromide as the brominating agent. The brominating is performed in solution, and dual extractions recover the spent brominating agent and recombine it with fresh bromine to regenerate an active tribromide.

WO 2011/008417 describes the use of brominated and epoxidized organic compounds as flame retardants for polymers such as polystyrene. The organic compounds contain both bromine and oxirane groups, and have molecular weights of at least 1500. The brominated and epoxidized organic compounds can be prepared by sequentially brominating and epoxiding (in either order) a starting compound that contains multiple non-conjugated carbon-carbon double bonds.

A potential use for the brominated polymer is as a flame retardant additive for thermoplastic polymers such as polystyrene. The thermal characteristics of the brominated polymer are very important in that application. The thermoplastic polymer is typically blended with the brominated polymer in a melt blending process. The blend is in most cases simultaneously or subsequently melt processed to form a fabricated product. For example, the blend can be melt processed by extruding it to form foamed or unfoamed articles, by injection molding, by melt casting, or by other processes that involve melting the blend in order to convert it into the desired product form. The brominated polymer must be heat-stable at the temperatures encountered during the melt blending and melt processing operations. Nonetheless, the brominated polymer must be able to decompose under fire conditions to liberate bromine or hydrogen bromide. If the brominated polymer is too heat-stable, it does not decompose at the correct temperature and is ineffective as a flame retardant. It has been found that a brominated polybutadiene polymer can have the thermal characteristics that are needed for the flame retardant applications, if it is prepared carefully by minimizing certain side reactions. The process described in WO 2008/021417 produces a brominated polybutadiene polymer having the desired thermal characteristics.

One problem with the process described in WO 2008/021417 is that it is often expensive to recover the brominated polymer from the reaction solution. The problem is particularly acute when a tetraethylammonium tribromide is used as the brominating agent, because the corresponding reaction by-product, tetraethylammonium monobromide salt, is poorly soluble in the reaction solvent. This means that solids are produced, which can be hard to handle. The remaining monobromide salt is typically removed from the reaction solution by an aqueous extraction process. This means that further expenses are incurred in handling the aqueous phase and in removing the water from the brominated polymer. On the other hand, tetraethylammonium tribromide is a very effective brominating agent. For that reason there is interest in using it in commercial-scale bromination processes. Therefore, a more cost-effective process is desired.

The present invention is in one aspect a process for forming a brominated butadiene polymer comprising a) reacting a butadiene polymer containing aliphatic carbon-carbon double bonds with tetraethylammonium tribromide, in the presence of at least one solvent for the butadiene polymer and tetraethylammonium monobromide salt, to form a brominated butadiene polymer and tetraethylammonium monobromide salt as a by-product, wherein at least the tetraethylammonium monobromide salt remains dissolved in the solvent, b) selectively separating either the brominated butadiene polymer or the tetraethylammonium monobromide salt from the solvent and c) if necessary, recovering the brominated butadiene polymer from the solvent.

Several advantages accrue from this invention. By selecting a solvent in which the tetraethylammonium monobromide salt is soluble, the recovery of the brominated butadiene polymer is surprisingly simplified. In many cases, the organic phase will separate into a lower phase which is rich in the brominated butadiene polymer and almost devoid of the monobromide salt and a top layer into which the tetraethylammonium monobromide salt is concentrated. These phases can be easily separated; the brominated butadiene polymer can be recovered readily from polymer-rich phase. The polymer-containing layer often contains tetraethylammonium monobromide salt in insignificant quantities, if at all. Therefore, it is often unnecessary to contact the brominated butadiene polymer with an aqueous phase at any time during the bromination or product recovery steps to remove the monobromide salt. This greatly simplifies product recovery because it becomes unnecessary to remove large amounts of water from the brominated product.

A polymer of butadiene is the starting material in this process. The butadiene polymer may be a homopolymer or a copolymer of butadiene and one or more other monomers. A copolymer may be a random, block or graft copolymer, and should contain at least 10% by weight of polymerized polybutadiene. Butadiene polymerizes to form two types of repeating units. One type, referred to herein as "1,2-butadiene units" takes the form 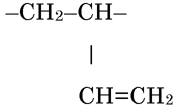 and so introduces pendant unsaturated groups to the polymer. The second type, referred to herein as "1,4-butadiene" units, takes the form -CH₂-CH=CH-CH₂-, and introduces unsaturation into the main polymer chain. The butadiene polymer should contain at least some 1,2-butadiene units. Of the butadiene units in the butadiene polymer, suitably at least 10%, preferably at least 15% and more preferably at least 20% and even more preferably at least 25% are 1,2-butadiene units. 1,2-butadiene units may constitute at least 50%, at least 55%, at least 60% or at least 70% of the butadiene units in the butadiene polymer. The proportion of 1,2-butadiene units may be in excess of 85% or even in excess of 90% of the butadiene units in the polymer.

Methods for preparing butadiene polymers with controlled 1,2-butadiene content are described by J. F. Henderson and M. Szwarc in Journal of Polymer Science (D, Macromolecular Review), Volume 3, page 317 (1968), Y. Tanaka, Y. Takeuchi, M. Kobayashi and H. Tadokoro in J. Polvm. Sci. A-2, 9, 43-57 (1971), J. Zymona, E. Santte and H. Harwood in Macromolecules, 6, 129-133 (1973), and H. Ashitaka, et al., in J. Polvm. Sci., Polvm. Chem., 21, 1853-1860 (1983).

A preferred starting material is a random, block or graft copolymer of butadiene and at least one vinyl aromatic monomer. A "vinyl aromatic" monomer is an aromatic compound having a polymerizable ethylenically unsaturated group bonded directly to a carbon atom of an aromatic ring. Vinyl aromatic monomers include unsubstituted materials such as styrene and vinyl naphthalene as well as compounds that are substituted on the ethylenically unsaturated group (such as alpha-methylstyrene, for example), and/or are ring-substituted. Ring-substituted vinyl aromatic monomers include those having halogen, alkoxyl, nitro or unsubstituted or substituted alkyl groups bonded directly to a carbon atom of an aromatic ring. Examples of such ring-substituted vinyl aromatic monomers include 2- or 4-bromostyrene, 2- or 4-chlorostyrene, 2- or 4-methoxystyrene, 2- or 4-nitrostyrene, 2- or 4-methylstyrene and 2,4-dimethylstyrene. Preferred vinyl aromatic monomers are styrene, alpha-methyl styrene, para-methyl styrene, and mixtures thereof.

"Vinyl aromatic units" are repeating units in the starting material that are formed when a vinyl aromatic monomer is polymerized. A suitable butadiene/vinyl aromatic starting copolymer contains from 5 to 90 percent by weight of polymerized vinyl aromatic monomer units and at least 10% by weight of polymerized butadiene.

A starting butadiene polymer may be a random, block (including multiblock such as diblock or triblock types) or graft type of copolymer. Styrene/butadiene block copolymers are widely available in commercial quantities. Those available from Dexco Polymers under the trade designation VECTOR™ are suitable. Styrene/butadiene random copolymers may be prepared in accordance with the processes described by A. F. Halasa in Polymer, Volume 46, page 4166 (2005). Styrene/butadiene graft copolymers may be prepared in accordance with methods described by A. F. Halasa in Journal of Polymer Science (Polymer Chemistry Edition), Volume 14, page 497 (1976). Styrene/butadiene random and graft copolymers may also be prepared in accordance with methods described by Hsieh and Quirk in chapter 9 of Anionic Polymerization Principles and Practical Applications, Marcel Dekker, Inc., New York, 1996.

The butadiene polymer may also contain repeating units formed by polymerizing monomers other than butadiene and a vinyl aromatic monomer. Such other monomers include olefins such as ethylene and propylene, acrylate or acrylic monomers such as methyl methacrylate, methyl acrylate, acrylic acid, and the like. These monomers may be randomly polymerized with the butadiene, may be polymerized to form blocks, or may be grafted onto the butadiene polymer.

The most preferred type of butadiene polymer is a block copolymer containing one or more polystyrene blocks and one or more polybutadiene blocks. Among these, diblock copolymers, and triblock copolymers having a central polybutadiene block and terminal polystyrene blocks, are especially preferred.

The butadiene polymer has a weight average molecular weight (M_{w}) within a range of from 1,000 to 400,000, preferably from 2,000 to 300,000, more preferably from 5,000 to 200,000 and even more preferably from 50,000 to 175,000. For purposes of this invention, molecular weights are apparent molecular weights as measured by Gel Permeation Chromatography (GPC), relative to a polystyrene standard. GPC molecular weight determinations can be performed using an Agilent 1100 series liquid chromatograph equipped with two Polymer Laboratories PLgel 5 micrometer Mixed-C columns connected in series and an Agilent G1362A refractive index detector, with tetrahydrofuran (THF) flowing at a rate of 1 mL/min and heated to a temperature of 35°C as the eluent.

The bromination reaction is conducted in the presence of a solvent for the butadiene polymer and tetraethylammonium monobromide salt. The solvent should be one which is a liquid under the bromination conditions and which does not undesirably react with the brominating agent. Suitable solvents are selected from the group of halogenated alkanes consisting of chloroform, dichloromethane, dibromomethane and bromochloromethane.

The tetraethylammonium tribromide brominating agent can be prepared by mixing the corresponding triethyl ammonium monobromide salt with elemental bromine. The monobromide salt is usually water-soluble, so a convenient way of making the tribromide is to add elemental bromine to an aqueous solution of the monobromide salt. This reaction proceeds well at approximately room temperature, but higher or lower temperatures can be used if desired. The tribromide tends to precipitate from the aqueous phase, and so may be recovered from the liquid phase by any convenient solid-liquid separation method. The tribromide is soluble in organic solvents such as the chlorinated solvents described above, and may be dissolved in such a solvent if desired to facilitate blending with the starting butadiene polymer and the bromination solvent.

In addition, the tribromide may be formed *in situ* in the presence of the solvent and/or the starting butadiene polymer, as described more fully below. This process has the advantage of using less of the expensive compound that serves to carry bromine to the polymer and is preferred.

The reaction is conducted by mixing the starting butadiene polymer, solvent and tetraethylammonium tribromide together and allowing the mixture to react until the desired proportion of butadiene units have been brominated. The order of addition is not especially important, except that if the tribromide and starting butadiene polymer are mixed first, it is preferred to add the solvent before significant reaction occurs.

The solvent is used in quantities sufficient to dissolve the starting butadiene polymer as well as the tetraethylammonium monobromide salt that is generated during the course of the reaction. The concentration of the starting butadiene polymer in the solvent may range from, for example, 1 to 50% by weight, especially from 5 to 35% by weight. About 0.5 to about 5 moles of the tetraethylammonium tribromide brominating agent are suitably used per mole of butadiene units in the starting polymer; a more suitable amount is from about 0.9 to about 2.5 moles/mole and an even more suitable amount is from 1 to 1.5 moles/mole.

Generally, only mild conditions are needed to effect the bromination. Bromination temperatures can range from -20 to 100°C, and are preferably from 0 to 85°C and especially from 10 to 40°C. Temperatures higher than 100°C could be used, but are not necessary and may lead to a loss of selectivity and/or an increase in by-products. The tribromide becomes converted to the corresponding tetraethylammonium monobromide salt as the reaction proceeds.

The time of the reaction is sufficient to achieve the desired amount of bromination. Typically, bromination occurs on at least 25% of the butadiene units in the starting butadiene polymer. More preferably, at least 50% and more preferably at least 70% and even more preferably at least 70% of the butadiene units are brominated. The extent of bromination can be determined using proton NMR methods. Residual double bond percentage, polymerized styrene monomer content and 1,2 isomer content can be determined by comparing integrated areas of signals due to appropriate protons (residual double bond protons are between 4.8 and 6 ppm) (relative to tetramethylsilane (TMS)), styrene aromatic protons are between 6.2-7.6 ppm, and protons for brominated polybutadiene are between 3.0 and 4.8 ppm). A Varian INOVA™ 300 NMR spectrometer or equivalent device is useful for such determinations, being operated with a delay time of 30 seconds to maximize relaxation of protons for quantitative integrations. A deutero-substituted solvent such as deutero-chloroform or d5-pyridine is suitable for diluting the sample for NMR analysis.

In certain embodiments of the invention, the tetraethylammonium tribromide is formed *in situ* in the reaction mixture by separately adding elemental bromine and tetraethylammonium monobromide salt. It is believed that the bromine and monobromide salt form the tribromide upon being mixed together, with the resulting tribromide then reacting with the starting butadiene polymer to brominate the polymer and regenerate the monobromide salt. As elemental bromine is consumed in this reaction sequence, more bromine may be added to the reaction mixture continuously or intermittently to regenerate the tribromide and maintain the reaction.

The ability to form the tetraethylammonium tribromide *in situ* lends itself to the operation of a continuous or semi-continuous process, in which elemental bromine is fed into a reaction mixture continuously or in any number of stages, as the tribromide is consumed in the reaction and the monobromide salt is regenerated. The elemental bromine combines with the regenerated monobromide salt to re-form the tribromide.

In some cases, the brominated butadiene polymer is insoluble in the reaction mixture and precipitates as the bromination proceeds. In such cases, the product can be recovered using any convenient solid/liquid separation method such as filtration, decantation or the like. The monobromide salt remains in the reaction solution and can be recycled or otherwise reused.

In other cases, the brominated butadiene polymer remains soluble in the reaction mixture. In such a case, the organic phase often will separate into a layer (usually a lower layer) which is rich in the brominated butadiene polymer and almost devoid of the monobromide salt; and another layer (typically an upper layer) into which the monobromide salt is concentrated. The latter layer may contain at least 75 mole-%, at least 90 mol-% or at least 95 mol-% of the tetraethylammonium monobromide salt. These layers can be easily separated. The tribromide can be regenerated by adding bromine to the layer containing the monobromide salt, and the regenerated tribromide can be re-used in the reaction. The brominated butadiene polymer can be recovered readily from the polymer-rich layer through a suitable method such as distillation of the solvent or addition of an anti-solvent that causes the brominated polymer to become insoluble and precipitate. Examples of such anti-solvents include lower alcohols such as methanol, ethanol and 1-propanol, 2-propanol, n-butanol, and t-butanol. The brominated butadiene polymer recovered in such a manner is often surprisingly low in tetraethylammonium monobromide salt, particularly when the brominated butadiene polymer is recovered through precipitation in an anti-solvent. Residual amounts of tetraethylammonium monobromide salt may be extracted into the anti-solvent in such a case.

In the processes according to the invention, the brominated butadiene polymer is prepared and recovered without contacting it with an aqueous phase. This greatly simplifies product recovery because it becomes unnecessary to remove large amounts of water from the brominated product.

The recovered polymer may be purified to remove residual bromine, any residual brominating agent, solvent and by-products as desired or needed for a particular application. Bromide salts may be removed by passing the polymer through silica gel or an ion exchange resin bed.

The process of the invention tends to produce brominated polymer products that have excellent thermal stability. A useful indicator of thermal stability is a 5% weight loss temperature, which is measured by thermogravimetric analysis as follows: 10 milligrams of the polymer is analyzed using a TA Instruments model Hi-Res TGA 2950 or equivalent device, with a 60 milliliters per minute (mL/min) flow of gaseous nitrogen and a heating rate of 10°C/min over a range of from room temperature (nominally 25°C) to 600°C. The mass lost by the sample over the temperature range of 100°C to 600°C is monitored during the heating step, and the temperature at which the sample has lost 5% of its initial weight is designated the 5% weight loss temperature (5% WLT). This method provides a temperature at which a sample undergoes a cumulative weight loss of 5 wt%, based on the sample weight at 100°C. The brominated polymer preferably exhibits a 5% WLT of at least 200°C. The 5% WLT is preferably at least 220°C, more preferably at least 230°C, even more preferably at least 240°C, and still more preferably at least 250°C. Brominated polymers in which at least 70% of the butadiene units have been brominated, and which have such 5% WLT values, are of particular interest.

A further increase in thermal stability is sometimes seen if the brominated butadiene polymer is treated with an alkali metal base. The alkali metal base may be, for example, a hydroxide or a carbonate. The alkali metal base is preferably an alkali metal alkoxide, as the alkali metal alkoxides tend to provide more of an increase in thermal stability than do some other bases such as alkali metal hydroxides, carbonates or carboxylates. The alkali metal can be lithium, sodium, potassium or cesium. Lithium, sodium and potassium are preferred. The base is an alkali metal alkoxide in preferred embodiments. The alkoxide ion can contain from 1 to 8, preferably from 1 to 4, carbon atoms, with methoxide and ethoxide being especially preferred. Especially preferred alkali metal alkoxides are lithium methoxide, sodium methoxide, potassium methoxide, lithium ethoxide, sodium ethoxide and potassium ethoxide. The brominated butadiene polymer can be treated with as little as 0.01 mole of the alkali metal base per mole of polymerized butadiene units in the polymer (whether brominated or unbrominated). There is no upper limit on the amount of alkali metal base, although cost and handling considerations mitigate against using more than about 1 mole of the alkali metal base per mole of polymerized (brominated or unbrominated) butadiene units in the polymer. A preferred amount is from 0.03 to 0.50 moles/mole of polymerized (brominated or unbrominated) butadiene units, and an especially preferred amount is from 0.05 to 0.20 moles/mole.

The brominated polymer is useful as a flame retardant additive for a variety of organic polymers. Organic polymers of interest include vinyl aromatic or vinyl aromatic polymers (including vinyl aromatic homopolymers, vinyl aromatic copolymers, or blends of one or more vinyl aromatic homopolymers and/or vinyl aromatic copolymers), as well as other organic polymers in which the brominated polymer is soluble or can be dispersed to form domains of less than 10 µm, preferably less than 5 µm, in size. Enough of the brominated polymer is preferably present in the blend to provide the blend with a bromine content within a range of from 0.1 percent by weight to 25 percent by weight, based upon blend weight.

The organic polymer containing the brominated polymer may be cellular. Extruded foams are of particular interest herein, as an advantage of the brominated polymer is that it is highly stable to the conditions of extrusion.

Blends of the brominated polymer with another organic polymer may include other additives such as other flame retardant additives, flame retardant adjuvants, thermal stabilizers, ultraviolet light stabilizers, nucleating agents, antioxidants, foaming agents, acid scavengers and coloring agents.

The following examples are provided to illustrate the invention, but not to limit the scope thereof. All parts and percentages are by weight unless otherwise indicated.

### Example

An 86,000 molecular weight styrene-butadiene-styrene triblock rubber with composition of 46 wt % styrene units and 54% butadiene units, of which 83% are in the form of the 1,2-isomer units, is brominated. This starting material contains 9.5 mmole of double bonds per gram. A solution of 13.0 g of the triblock rubber in 130 g of dichloromethane (DCM) is heated to reflux, while a solution of bromine (20.7 g, 0.130 mole) and tetraethylammonium bromide (32.7 g, 0.156 mole) in 63 g DCM is added over a 10 minute period. The resulting mixture is heated to reflux and mechanically stirred (250 rpm) for 2 hours, at which point the stirring is stopped and the reaction mixture allowed to separate into layers. The top layer is orange in color and accounts for 75% of the mass of the reaction mixture. The lower layer is light yellow in color. The lower layer is very viscous and contains the brominated rubber. A portion of the brominated rubber is isolated by casting a film from a portion of the lower layer and allowing the solvent to evaporate. NMR reveals that 73% of the double bonds in the starting rubber have been brominated. The NMR spectrum also reveals that the lower, polymer-containing layer only contains 4% of the original tetraethylammonium cations, which indicates that almost all of the tetraethylammonium monobromide reaction by-product has migrated into the top layer.

## Claims

1. A process for forming a brominated butadiene polymer comprising a) reacting a butadiene polymer containing aliphatic carbon-carbon double bonds with tetraethylammonium tribromide, in the presence of at least one solvent for the butadiene polymer and tetraethylammonium monobromide salt, to form a brominated butadiene polymer and tetraethylammonium monobromide salt as a by-product, wherein at least the tetraethylammonium monobromide salt remains dissolved in the solvent, b) selectively separating either the brominated butadiene polymer or the tetraethylammonium monobromide salt from the solvent and c) if necessary, recovering the brominated butadiene polymer from the solvent, wherein the solvent is chloroform, dichloromethane, dibromomethane or bromochloromethane, and, wherein the brominated butadiene polymer is recovered without contacting it with an aqueous phase.

2. The process of claim 1, wherein brominated butadiene polymer precipitates from the solvent and is separated from the solvent by a liquid-solid separation method.

3. The process of claim 1, wherein at least a portion of the brominated butadiene polymer remains dissolved in the solvent, and the reaction mixture forms a layer which is rich in the brominated butadiene polymer and another layer in which the tetraethylammonium monobromide salt is concentrated, and the layer which is rich in the brominated butadiene polymer is separated from the layer in which the tetraethylammonium monobromide salt is concentrated.

4. The process of claim 3, wherein the layer in which the tetraethylammonium monobromide salt is concentrated contains at least 75 mol-% of the tetraethylammonium monobromide salt.

5. The process of claim 4, wherein the layer in which the tetraethylammonium monobromide salt is concentrated contains at least 90 mol-% of the tetraethylammonium monobromide salt.

6. The process of any preceding claim, wherein the butadiene polymer is a butadiene/vinyl aromatic copolymer.

7. The process of claim 8, wherein the butadiene polymer is a styrene/butadiene block copolymer.

## Patentansprüche

1. Verfahren zum Bilden eines bromierten Butadienpolymers, umfassend a) Reagieren eines Butadienpolymers, das aliphatische Kohlenstoff-Kohlenstoff-Doppelbindungen enthält, mit Tetraethylammoniumtribromid in Gegenwart mindestens eines Lösungsmittels für das Butadienpolymer und Tetraethylammoniummonobromidsalz, um ein bromiertes Butadienpolymer und Tetraethylammoniummonobromidsalz als Nebenprodukt zu bilden, wobei mindestens das Tetraethylammoniummonobromidsalz in dem Lösungsmittel gelöst bleibt, b) selektiv Trennen entweder des bromierten Butadienpolymers oder des Tetraethylammoniummonobromidsalzes von dem Lösungsmittel und c) nötigenfalls Gewinnen des bromierten Butadienpolymers aus dem Lösungsmittel, wobei das Lösungsmittel Chloroform, Dichlormethan, Dibrommethan oder Bromchlormethan ist und wobei das bromierte Butadienpolymer ohne Kontaktieren desselben mit einer wässrigen Phase gewonnen wird.

2. Verfahren nach Anspruch 1, wobei das bromierte Butadienpolymer aus dem Lösungsmittel ausfällt und von dem Lösungsmittel durch ein Flüssigkeit-Feststoff-Trennverfahren getrennt wird.

3. Verfahren nach Anspruch 1, wobei mindestens ein Teil des bromierten Butadienpolymers in dem Lösungsmittel gelöst bleibt und die Reaktionsmischung eine Schicht, die reich an dem bromierten Butadienpolymer ist, und eine andere Schicht bildet, in der das Tetraethylammoniummonobromidsalz konzentriert ist und die Schicht, die reich an dem bromierten Butadienpolymer ist, von der Schicht getrennt wird, in der das Tetraethylammoniummonobromidsalz konzentriert ist.

4. Verfahren nach Anspruch 3, wobei die Schicht, in der das Tetraethylammoniummonobromidsalz konzentriert ist, mindestens 75 Mol-% des Tetraethylammoniummonobromidsalzes enthält.

5. Verfahren nach Anspruch 4, wobei die Schicht, in der das Tetraethylammoniummonobromidsalz konzentriert ist, mindestens 90 Mol-% des Tetraethylammoniummonobromidsalzes enthält.

6. Verfahren nach einem vorhergehenden Anspruch, wobei das Butadienpolymer ein Butadien-/vinylaromatisches Copolymer ist.

7. Verfahren nach Anspruch 8, wobei das Butadienpolymer ein Styrol-/Butadien-Blockcopolymer ist.

## Revendications

1. Procédé de formation d'un polymère de butadiène bromé comprenant a) la réaction d'un polymère de butadiène contenant des doubles liaisons carbone-carbone aliphatiques avec du tribromure de tétraéthylammonium, en la présence d'au moins un solvant pour le polymère de butadiène et le sel monobromure de tétraéthylammonium, pour former un polymère de butadiène bromé et du sel monobromure de tétraéthylammonium comme sous-produit, au moins le sel monobromure de tétraéthylammonium demeurant dissous dans le solvant, b) la séparation sélectivement soit du polymère de butadiène bromé soit du sel monobromure de tétraéthylammonium du solvant et c) si nécessaire, la récupération du polymère de butadiène bromé du solvant, le solvant étant le chloroforme, le dichlorométhane, le dibromométhane ou le bromochlorométhane, et, le polymère de butadiène bromé étant récupéré sans le mettre en contact avec une phase aqueuse.

2. Procédé selon la revendication 1, dans lequel le polymère de butadiène bromé précipite du solvant et est séparé du solvant par un procédé de séparation liquide-solide.

3. Procédé selon la revendication 1, dans lequel au moins une portion du polymère de butadiène bromé demeure dissoute dans le solvant, et le mélange réactionnel forme une couche qui est riche en polymère de butadiène bromé et une autre couche dans laquelle le sel monobromure de tétraéthylammonium est concentré, et la couche qui est riche en polymère de butadiène bromé est séparée de la couche dans laquelle le sel monobromure de tétraéthylammonium est concentré.

4. Procédé selon la revendication 3, dans lequel la couche dans laquelle le sel monobromure de tétraéthylammonium est concentré contient au moins 75 % en mole du sel monobromure de tétraéthylammonium.

5. Procédé selon la revendication 4, dans lequel la couche dans laquelle le sel monobromure de tétraéthylammonium est concentré contient au moins 90 % en mole du sel monobromure de tétraéthylammonium.

6. Procédé selon l'une quelconque des revendications précédentes, dans lequel le polymère de butadiène est un copolymère aromatique de butadiène/vinyle.

7. Procédé selon la revendication 8, dans lequel le polymère de butadiène est un copolymère séquencé de styrène/butadiène.
